# EUROPEAN PATENT APPLICATION

(11) **EP 4 588 803 A1**
(43) Date of publication of application: **23.07.2025**
(21) Application number: 25152618.2
(22) Date of filing: 17.01.2025
(51) Int. Cl.: B64D 11/06, B60N 3/00

(54) **SLIDING AND SEMI-AUTOMATED LATCH MECHANISM FOR PASSENGER SEAT MEAL TABLE**

(30) Priority: 18.01.2024 IN 202411003611; 26.11.2024 US 202418960610
(71) Applicant: B/E Aerospace, Inc., Winston-Salem, NC 27105 (US)
(72) Inventor: KATURI, Pavan, AP 533234 Yeditha, Kphb (IN); KUMAR, Parveen, 132101 PANIPAT (IN); KASULA, Sai Varun, 500015 Secunderabad (IN)
(74) Representative: Dehns

(57) **Abstract**

A latch mechanism (110) for a passenger seat meal table (104) and a passenger seat assembly (100) including a latching meal table. The latch mechanism includes a housing (114), a rod (120) mounted in the housing, a slider (118) mounted on the rod, a latch (112) rotatably mounted to the housing, a rotary motion component (124) mounted on the rod configured to interact with the slider and the latch to convert linear motion of the slider into rotational motion of the latch, and a lock mechanism (126) mounted to the housing configured to interact with the rotary motion component to maintain the latch in the unlatched condition. In use, moving the meal table to a stowed position causes the latch to deploy to a latched condition to maintain the meal table in the stowed position.

## Description

### TECHNICAL FIELD AND BACKGROUND

The present invention relates generally to a latch mechanism, and more particularly, to a sliding and semi-automated latch mechanism for a passenger seat meal table.

Passenger seats such as economy class aircraft passenger seats typically include a deployable meal table. A traditional meal table may be rotatably mounted to a seat back, either directly or through intermediate support arms. In use, the meal table is stowed against the backside of the seat back in preparation for taxi, takeoff, and landing (TTOL), and may be rotated to a horizontal use position during flight.

Traditional meal tables include a rotatable latch for maintaining the meal table in the stowed position. In use, to deploy the meal table, the latch is rotated to a position out of contact with the meal table such that the meal table is free to rotate downward to the horizontal position. In use, to stow the meal table, the meal table is typically raised to a position against the seat back, and held in position while the latch is rotated to a position in contact with the meal table. Latch rotation between the latched and unlatched positions may be about 90 degrees.

Traditional rotating latches are undesirable in that they require two-handed operation (i.e., one hand to rotate the latch and the other hand to manipulate the meal table between the stowed and deployed positions). Traditional rotating latches are further undesirable in that their visibility detracts from the seat back aesthetics. In addition, rotating latches that protrude from the seat back present a head injury risk in the event of a sudden deceleration (for aircraft passenger seats, 14 CFR § 25.562 requires that for a high G-force event, where head contact with seats or other structures may occur, Head Injury Criterion or "HIC" type protection must be provided).

Therefore, what is needed is a latch mechanism for a meal table that facilitates one-handed operation, reduces the potential for head contact injuries, and provides an improved seat back aesthetic, among other features and benefits.

### BRIEF SUMMARY

According to one aspect, the inventive concepts according to the present invention are directed to a latch mechanism for a passenger seat meal table. In embodiments, the latch mechanism includes a housing for mounting to a meal table, a rod mounted in the housing, a slider mounted on the rod, a latch rotatably mounted to the housing and configured to rotate between an unlatched condition and a latched condition, a rotary motion component mounted on the rod and configured to interact with the slider and the latch to convert linear motion of the slider into rotational motion of the latch, and a lock mechanism mounted to the housing configured to interact with the rotary motion component to maintain the latch in the unlatched condition.

In some embodiments, the latch mechanism further includes a first biasing element coupled between the housing and the slider for biasing the slider toward a first end of the rod, and a second biasing element coupled between the housing and the rotary motion component for biasing the rotary motion component toward the first end of the rod.

In some embodiments, the rotary motion component includes a middle portion defining a through passage for receiving the rod, a first leg extending from the middle portion, the first leg rotatably engaging one end of the latch, and a second leg extending from the middle portion, the second leg attached to one end of the second biasing element.

In some embodiments, when the latch is in the unlatched condition the lock mechanism is engaged with the rotary motion component and the rotary motion component and the slider are positioned out of contact and at substantially opposite ends of the rod, and when the latch is in the latched condition the slider is positioned at one end of the rod and the rotary motion component is positioned in contact with the slider.

In some embodiments, the latch has a first end, a second end, and a rotational axis positioned between the first and second ends, when the latch is in the unlatched condition the first end of the latch is positioned within the housing, and when the latch is in the latched condition the first end of the latch is positioned outside of the housing.

In some embodiments, the slider includes a first portion presented at a front of the housing for manipulating the slider, and a second portion positioned inside the housing slidably mounted on the bar.

In some embodiments, the housing includes a recess formed on the front of the housing, the first portion of the slider is configured to slide back-and-forth within the recess, and a front of the first portion of the slider is positioned flush with a front of the housing.

In some embodiments, the lock mechanism includes a lock pin mounted for linear motion in the housing for interacting with an element positionable adjacent the housing to move the lock pin from a first position in contact with the rotary motion component to a second position out of contact with the rotary motion component, and a third biasing element mounted on the lock pin for biasing the lock pin toward the first position.

In some embodiments, the linear motion of the lock pin is perpendicular to the linear motion of the slider.

According to another aspect, the inventive concepts according to the present invention are directed to a passenger seat assembly including a seat back, a meal table mounted to the seat back and movable between a stowed position against the seat back and a deployed position apart from the seat back, and latch mechanism mounted to the meal table.

According to a further aspect, the inventive concepts according to the present invention are directed to a passenger seat assembly including a seat back, a meal table rotatably mounted to the seat back and movable between a stowed position against the seat back and a deployed position apart from the seat back, and a latch mechanism for latching the meal table in the stowed position.

This summary is provided solely as an introduction to subject matter that is fully described in the following detailed description and drawing figures. This summary should not be considered to describe essential features nor be used to determine the scope of the claims. Moreover, it is to be understood that both the foregoing summary and the following detailed description are explanatory only and are not necessarily restrictive of the subject matter claimed.

### BRIEF DESCRIPTION OF THE DRAWINGS

Implementations of the inventive concepts disclosed herein may be better understood when consideration is given to the following detailed description thereof. Such description refers to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a rear view of a seat back of an aircraft passenger seat including a latch mechanism for a meal table according to an embodiment of the present invention;
FIG. 2 is a front perspective view of a latch mechanism in an unlatched condition according to an embodiment of the present invention;
FIG. 3 is a rear perspective view of the latch mechanism in the unlatched condition according to an embodiment of the present invention;
FIG. 4 is a top view of the latch mechanism in the unlatched condition according to an embodiment of the present invention;
FIGS. 5A-5C are sequential views of the latch mechanism illustrating slider operation according to an embodiment of the present invention;
FIG. 6A is a rear view of the latch mechanism in the unlatched condition according to an embodiment of the present invention;
FIG. 6B is a detailed view of FIG. 6A illustrating a lock pin according to an embodiment of the present invention;
FIG. 7A is a rear view of the latch mechanism in the latched condition according to an embodiment of the present invention;
FIG. 7B is a detailed view of FIG. 7A illustrating the operation of the lock pin according to an embodiment of the present invention; and
FIG. 8 is a sectional view of a portion of a seat back assembly illustrating the latch mechanism in the latched condition.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting. The scope of the invention is defined by and only limited by the claims.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant invention.

Broadly, embodiments of the inventive concepts disclosed herein are directed to a latch mechanism for maintaining a meal table in a stowed position against a seat back, and a passenger seat assembly including meal table having a latch mechanism. In use, the latch mechanism permits the meal table to be manipulated between stowed and deployed positions using one hand, and operates to automatically deploy a latch when the meal table is at or near the end of its stowing motion. In use, the latch mechanism includes a slider configured to slide to the side (e.g., horizontally), and the slider interacts with a separate component that interacts with a rotating latch to convert linear motion of the slider into rotational motion of the latch. In embodiments, the slider is biased to return automatically to a starting position between uses of the slider, and the latch mechanism includes a lock configured to maintain the latch in a latching position for maintain the meal table against the seat back.

The meal table according to the present invention may have a variety of different shapes and rotational attachments as known to those skilled in the art or meal table. For example, the meal table may be directly rotationally attached to the seat back, or may be attached to support arms rotationally attached to the seat back. In use, the meal table stows in an upright orientation against the backside of the seat back, and deploys to a substantially horizontal position apart from the seat back. In embodiments, the stowed position corresponds to a TTOL phase and the deployed position corresponds to a flight phase. The latch mechanism described herein is compatible with other meal table mechanisms including, but not limited to, folding tables, table extensions, etc.

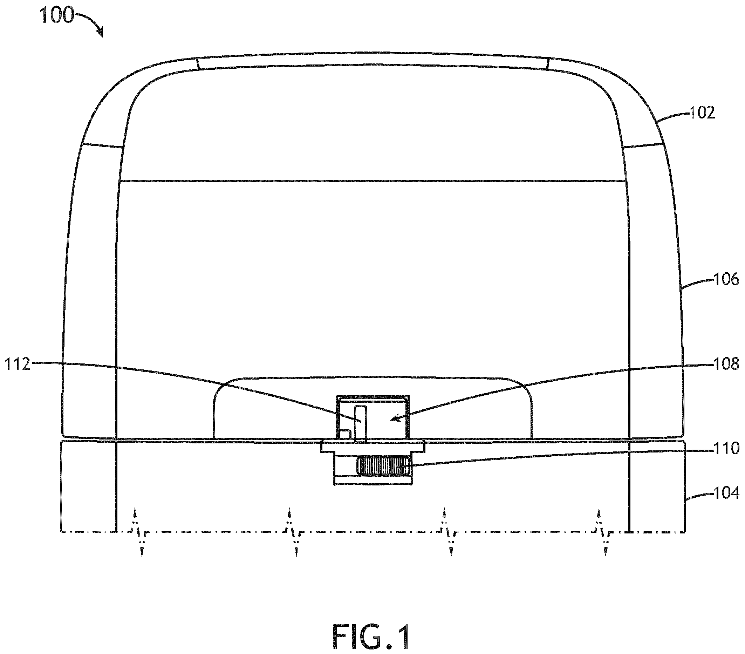

As depicted in FIG. 1, a passenger seat assembly 100 generally includes a seat back 102 and a meal table 104 rotatably coupled to the seat back 102 as discussed above. In embodiments, the seat back includes a shroud 106 forming a recess 108 enterable from below. The meal table 104 includes a latch mechanism 110 mounted to the meal table 104, for instance along the 'top' edge of the meal table as shown. In use, when the latch mechanism 110 is in a latched condition, a latch 112 is positioned in the recess 108 to maintain the meal table 104 in the stowed position. In other words, the deployed latch 112 engages with the embodied feature 148 of 108 and prevents the meal table 104 from rotating apart from the seat back 102. In use, when the latch 112 is in the unlatched condition, the latch 112 is positioned with the latch mechanism 110 and outside of the recess 108 such that the meal table 104 can be rotated apart from the seat back. The latch mechanism 110 operates to 'stow' the latch 112 to allow the meal table 104 to be deployed, and 'deploy' the latch 112 automatically when the meal table 104 is stowed.

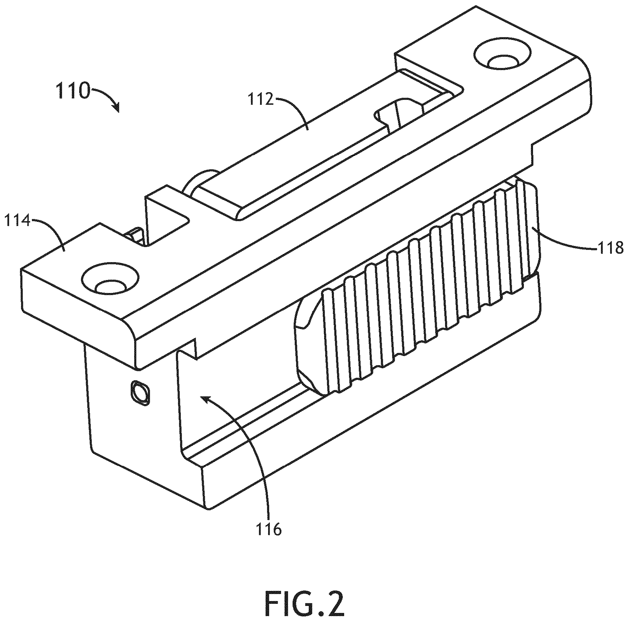

As depicted in FIG. 2, the latch mechanism 110 generally includes a housing 114 for mounting to a meal table, for instance along one edge of the meal table (e.g., top edge when the meal table is in the stowed position as shown in FIG. 1). When in the unlatched condition allowing the meal table to be deployed, the latch 112 is positioned within the housing 114. In some embodiments, the housing 114 includes a recess 116 positioned along the front of the housing 114, and a first portion of a slider 118 is positioned in the recess 116. In use, the slider 118 slides back-and-forth, manipulated by hand, within the recess 116. In some embodiments, the first portion of the slider 118 may be knurled to facilitate gripping to manipulate the slider side-to-side horizontally. In some embodiments, the front of the slider 118 is positioned substantially flush with the front of the housing 114 to minimize protrusions on the seat back.

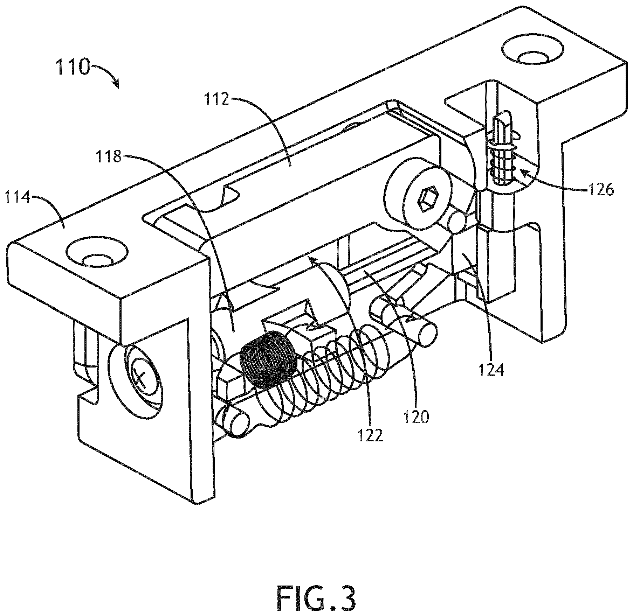

As depicted in FIG. 3, the latch mechanism 110 further includes a rod 120 mounted in the housing 114, for instance extending horizontally. A second portion of the slider 118 is mounted on the rod 120 for linear motion. As shown, the housing 114 includes an opening 122 formed along the front of the housing 114 for receiving the slider 118. The latch 112 is rotatably mounted to the housing 114. Fig. 3 shows the latch 112 in the unlatched position stowed in the housing 114. The latch mechanism 110 further includes a rotary motion component 124 mounted on the rod 120. In use, the rotary motion component 124 is configured to interact with the slider 118 and the latch 112, as an intermediate component, to convert linear motion of the slider 118 into rotational motion of the latch 112. A lock mechanism 126 is mounted to the housing 114. In use the lock mechanism 126 is configured to interact with the rotary motion component 124 to maintain the latch in the unlatched condition as shown.

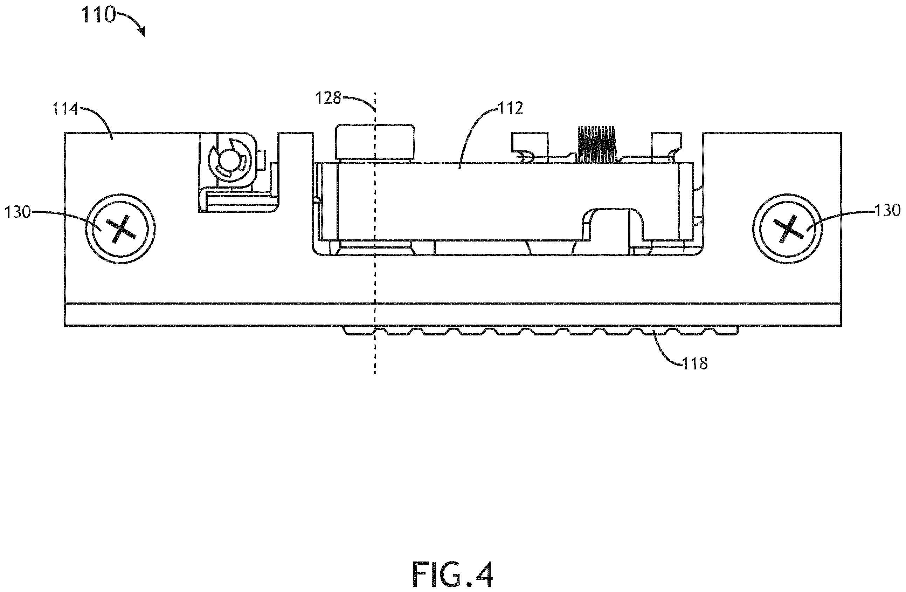

As depicted in FIG. 4, the latch 112 rotates about a rotation axis shown at 128. The housing 114 may be mounted to the meal table, for instance along the 'top' edge, using fasteners 130 configured to be secured to the meal table. The front of the slider 118 may be positioned substantially flush with the front of the housing 114.

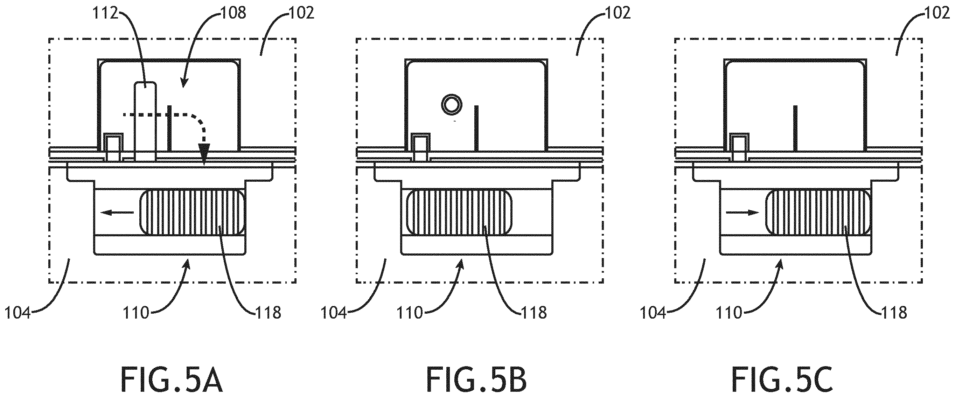

As depicted in FIGS. 5A-5C, the latch mechanism 110 operates to maintain the meal table 104 in the stowed position against the seat back 102. FIG. 5A shows the latch mechanism 110 in the latched condition in which the latch 112 is deployed to be positioned in the recess 108 formed in the seat back 102. In use, sliding the slider 118 from its original position (e.g., sliding the slider 118 to the left) causes the latch 112 to rotate to its stowed position in the latch mechanism 110. FIG. 5B shows the slider 118 sill being held. FIG. 5C shows the slider 118 once released causing the slider 118 to return automatically to its original position.

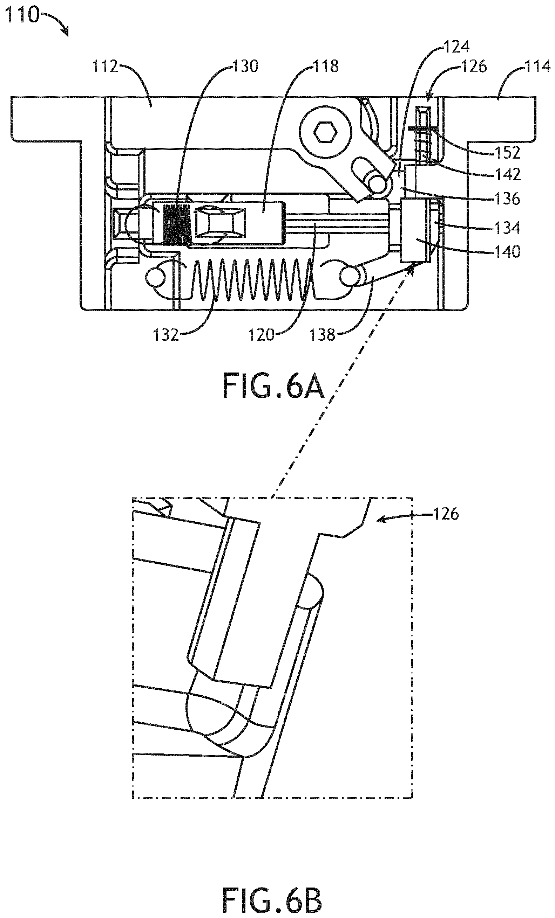

As depicted in FIG. 6A, the latch mechanism 110 further includes a first biasing element 130 coupled between the housing 114 and the slider 118. The first biasing element 130, for instance a tension spring with hook ends, is configured to bias the slider 118 toward a first end of the rod 120 which corresponds to the originating position of the slider 118. A second biasing element 132 is coupled between the housing 114 and the rotary motion component 124. The second biasing element 132, for instance a tension spring with hook ends, is configured to bias the rotary motion component 124 toward the first end of the rod 120. FIG. 6A shows the latch mechanism 110 in the unlatched condition in which the slider 118 is positioned in the original position, the rotary motion component 124 is positioned apart from the slider 118 and at the opposite end of the rod 120, and the latch 112 rotated to a position within the housing 114. In embodiments, the rotary motion component 124 includes a middle portion 134 defining a through passage for receiving the rod 120, a first leg 136 extending from the middle portion 134 and rotatably engaging one end of the latch 112, and a second leg 138 extending from the middle portion 134 and attached to one end of the second biasing element 132.

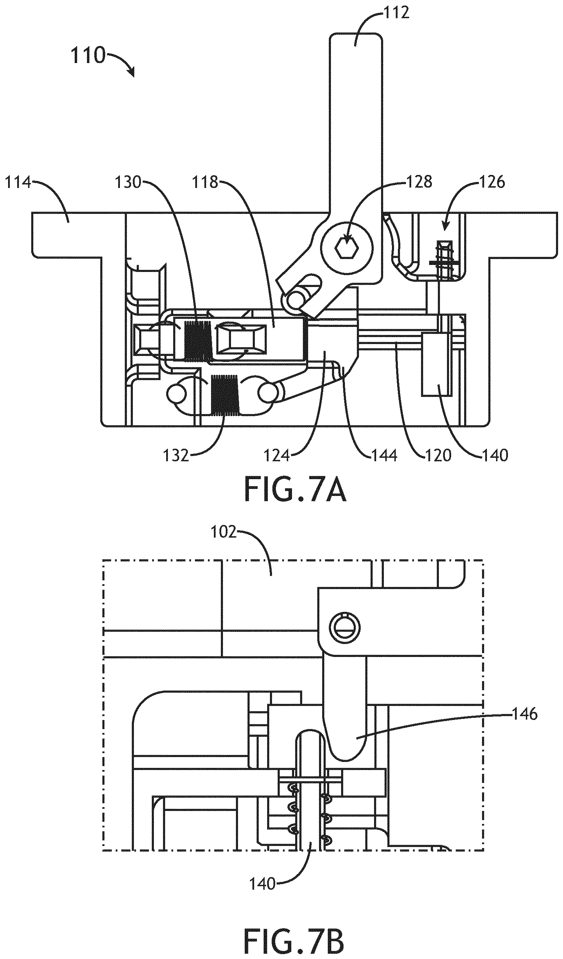

As depicted in FIGS. 6A and 6B, the lock mechanism 126 includes a lock pin 140 mounted for linear motion in the housing 114 configured to interact with an element positionable adjacent the housing to move the lock pin 140 from a first position in contact with the rotary motion component 124 as shown in FIG. 6A, to a second position out of contact with the rotary motion component 124 as shown in FIG. 7A. A third biasing element 142 mounted on the lock pin 140, between the lock pin 140 and the housing 114, is configured to bias the lock pin 140 toward the first position. A positionable component, for instance implemented as a ring 152, holds the third biasing element 142 in place and acts as a stopper limit for the lock pin 140.

As depicted in FIG. 7A, when the latch mechanism 110 is in the latched condition, the slider 118 is positioned in the original position, the rotary motion component 124 is positioned in contact with the slider 118, and the latch 112 is rotated to a position outside of the housing 114. In this configuration, the rotary motion component 124 is positioned to be moved with the slider 118 to cause the latch 112 to be rotated to a position within the housing 114. When the slider 118 pushes the rotary motion component 124 to the opposite end of the rod 120 as shown in FIG. 6A, the lock mechanism engages the rotary motion component 124 to hold the rotary motion component 124 at the opposite end of the rod 120 (e.g., the right end as viewed in the drawing) to maintain the latch 112 stowed in the housing 114. As shown, the rotary motion component 124 includes a ramped feature 144 that engages the lock pin 140 to urge the lock pin 140 `up' to allow the rotary motion component 124 to move past and then, under the force of the third biasing element 142, the lock pin 140 to move 'down' to maintain the rotary motion component 124 at the second end of the rod 120. In embodiments, the latch 112 has a first end, a second end, and a rotational axis 128 positioned between the first and second ends.

As depicted in FIG. 7B, to automatically deploy the latch 112 when stowing the meal table, an element 146 on the seat back 102 is configured to engage the lock pin 140 to cause the lock pin 140 to be driven 'down' to release the rotary motion component 124 to cause the latch 112 to deploy. In embodiments, the rotary motion component 124 includes a middle portion 134 defining a through passage for receiving the rod 120, a first leg 136 extending from the middle portion 134 and rotatably engaging one end of the latch 112, and a second leg 138 extending from the middle portion 134 and attached to one end of the second biasing element 132.

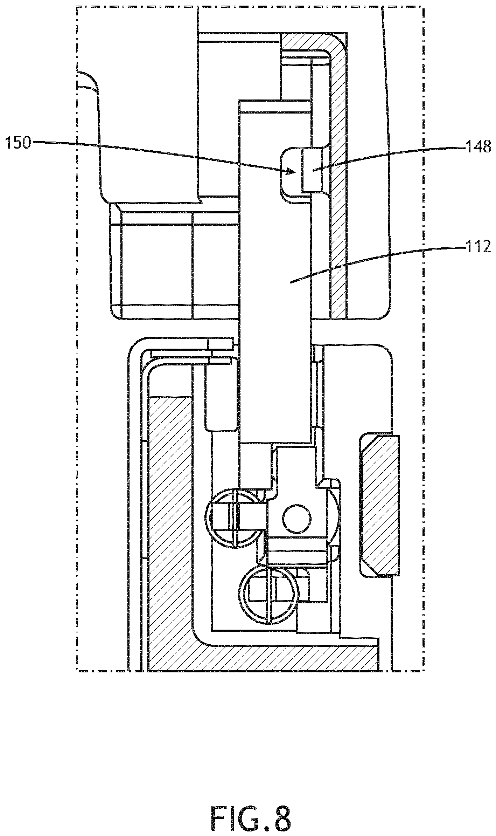

As depicted in FIG. 8, in some embodiments the seat back includes a protruding feature 148 configured to be received in a recess feature 150 formed in the latch 112. In use when the meal table is stowed, the protruding feature 148 engages with the recess feature 150, and in the event of deformation of the seat assembly components, the positioning of the protruding feature 148 in the formed recess 150 functions to maintain the meal table in the latched condition. In some embodiments, the features may be a seat certification requirement.

From the above description, it is clear that the inventive concepts disclosed herein are well adapted to achieve the objectives and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the scope of the invention as defined by the claims.

## Claims

1. A passenger seat assembly (100), comprising:
a seat back (102);
a meal table (104) mounted to the seat back, the meal table movable between a stowed position against the seat back and a deployed position apart from the seat back; and
a latch mechanism (110) mounted to the meal table;
**characterized in that** the latch mechanism includes:
a housing (114);
a rod (120) mounted in the housing;
a slider (118) mounted on the rod;
a latch (112) rotatably mounted to the housing, the latch configured to rotate between an unlatched condition in which the latch is positioned within the housing, and a latched condition in which the latch is positioned within the seat back;
a rotary motion component (124) mounted on the rod, the rotary motion component configured to interact with the slider and the latch to convert linear motion of the slider into rotational motion of the latch; and
a lock mechanism (126) mounted to the housing, the lock mechanism configured to interact with the rotary motion component to maintain the latch in the unlatched condition, and the lock mechanism configured to interact with an element positioned in the seat back to cause the latch to rotate to the latched condition when the meal table is moved to the stowed position.

2. The passenger seat assembly (100) according to claim 1, wherein the latch mechanism further comprises:
a first biasing element (130) coupled between the housing and the slider, the first biasing element configured to bias the slider toward a first end of the rod; and
a second biasing element (132) coupled between the housing and the rotary motion component, the second biasing element configured to bias the rotary motion component toward the first end of the rod.

3. The passenger seat assembly (100) according to claim 1 or 2, wherein the rotary motion component comprises:
a middle portion (134) defining a through passage for receiving the rod;
a first leg (136) extending from the middle portion, the first leg rotatably engaging one end of the latch; and
a second leg (138) extending from the middle portion, the second leg attached to one end of the second biasing element.

4. The passenger seat assembly (100) according to any preceding claim, wherein:
when the latch is in the unlatched condition, the lock mechanism is engaged with the rotary motion component, and the rotary motion component and the slider are positioned out of contact and at substantially opposite ends of the rod; and
when the latch is in the latched condition, the slider is positioned at one end of the rod and the rotary motion component is positioned in contact with the slider.

5. The passenger seat assembly (100) according to any preceding claim, wherein:
the latch has a first end, a second end, and a rotational axis (128) positioned between the first and second ends;
when the latch is in the unlatched condition, the first end of the latch is positioned within the housing; and
when the latch is in the latched condition, the first end of the latch is positioned outside of the housing and within a recess formed in the seat back.

6. The passenger seat assembly (100) according to any preceding claim, wherein:
the slider comprises a first portion presented at a front of the housing for manipulating the slider, and a second portion positioned inside the housing slidably mounted on the bar;
the housing includes a recess (116) formed on the front of the housing;
the first portion of the slider is configured to slide back-and-forth within the recess; and
a front of the first portion of the slider is positioned flush with a front of the housing.

7. The passenger seat assembly (100) according to any preceding claim, wherein the lock mechanism comprises:
a lock pin (140) mounted for linear motion in the housing, the lock pin configured to interact with an element positioned in the seat back to move the lock pin from a first position in contact with the rotary motion component to a second position out of contact with the rotary motion component; and
a third biasing element (142) mounted on the lock pin, the third biasing element configured to bias the lock pin toward the first position.

8. A latch mechanism (110) for a passenger seat meal table , the latch mechanism comprising:
a housing (114) for mounting to a meal table;
a rod (120) mounted in the housing;
a slider (118) mounted on the rod;
a latch (112) rotatably mounted to the housing, the latch configured to rotate between an unlatched condition and a latched condition;
a rotary motion component (124) mounted on the rod, the rotary motion component configured to interact with the slider and the latch to convert linear motion of the slider into rotational motion of the latch; and
a lock mechanism (126) mounted to the housing, the lock mechanism configured to interact with the rotary motion component to maintain the latch in the unlatched condition.

9. The latch mechanism (110) according to claim 8, further comprising:
a first biasing element (130) coupled between the housing and the slider, the first biasing element configured to bias the slider toward a first end of the rod; and
a second biasing element (132) coupled between the housing and the rotary motion component, the second biasing element configured to bias the rotary motion component toward the first end of the rod.

10. The latch mechanism (110) according to claim 8 or 9, wherein the rotary motion component comprises:
a middle portion (134) defining a through passage for receiving the rod;
a first leg (136) extending from the middle portion, the first leg rotatably engaging one end of the latch; and
a second leg (138) extending from the middle portion, the second leg attached to one end of the second biasing element.

11. The latch mechanism (110) according to claim 8, 9 or 10, wherein:
when the latch is in the unlatched condition, the lock mechanism is engaged with the rotary motion component, and the rotary motion component and the slider are positioned out of contact and at substantially opposite ends of the rod; and
when the latch is in the latched condition, the slider is positioned at one end of the rod and the rotary motion component is positioned in contact with the slider.

12. The latch mechanism (110) according to any of claims 8 to 11, wherein:
the latch has a first end, a second end, and a rotational axis (128) positioned between the first and second ends;
when the latch is in the unlatched condition, the first end of the latch is positioned within the housing; and
when the latch is in the latched condition, the first end of the latch is positioned outside of the housing.

13. The latch mechanism (110) according to any of claims 8 to 12, wherein:
the slider includes a first portion presented at a front of the housing for manipulating the slider, and a second portion positioned inside the housing slidably mounted on the bar;
the housing includes a recess (116) formed on the front of the housing;
the first portion of the slider is configured to slide back-and-forth within the recess; and
a front of the first portion of the slider is positioned flush with a front of the housing.

14. The latch mechanism (110) according to any of claims 8 to 13, wherein the lock mechanism comprises:
a lock pin (140) mounted for linear motion in the housing, the lock pin configured to interact with an element positionable adjacent the housing to move the lock pin from a first position in contact with the rotary motion component to a second position out of contact with the rotary motion component; and
a third biasing element (142) mounted on the lock pin, the third biasing element configured to bias the lock pin toward the first position.

15. The latch mechanism (110) according to claim 14, wherein the linear motion of the lock pin is perpendicular to the linear motion of the slider along the rod.
